Europäisches Patentamt

European Patent Office

Office européen des brevets

(11) Publication number: **0 427 101 A2**

# EUROPEAN PATENT APPLICATION

(21) Application number: 90120865.2

(22) Date of filing: 31.10.90

(51) Int. Cl.⁵: **C08J 5/00, B29C 37/00, C08G 61/08**

The title of the invention has been amended (Guidelines for Examination in the EPO, A-III, 7.3).

(30) Priority: 02.11.89 JP 284916/89

(43) Date of publication of application:
15.05.91 Bulletin 91/20

(84) Designated Contracting States:
BE DE FR GB IT NL SE

(71) Applicant: NIPPON ZEON CO., LTD.
6-1, Marunouchi 2-chome
Chiyoda-ku Tokyo 100(JP)

(72) Inventor: Ueno, Susumu
34-22-312, Akazutsumi, 3-chome
Setagaya-ku, Tokyo(JP)
Inventor: Matsui, Masayoshi
5-4-7, Chuo
Yamato-shi, Kanagawa(JP)
Inventor: Okumura, Kin-ichi
1-301, 2-26, Kajiwara
Kamakura-shi, Kanagawa(JP)
Inventor: Yamato, Motoyuki
Ooiso Koma Haitsu 2-232, 2-21, Koma,
Ooiso-cho
Naka-gun, Kanagawa(JP)

(74) Representative: von Kreisler, Alek,
Dipl.-Chem. et al
Patentanwälte Von Kreisler-Selting-Werner,
Deichmannhaus am Hauptbahnhof
W-5000 Köln 1(DE)

(54) Composite articles and method for their preparation.

(57) A method of making an integrally molded composite article composed of a ring-opened polynorbornene matrix and a compatibilized laminate and/or core components is disclosed. Laminate and/or core components that have low adhesion to polynorbornene or that interfere with the ring-opening polymerization of norbornene monomers are compatibilized by coating at least a portion of their surface with an inert polymer coating. The polymer coating enhances adhesion and prevents the interaction of deleterious functionalities on the structural components with the reactive monomer catalyst solution.

EP 0 427 101 A2

## COMPOSITE ARTICLES AND METHOD THEREFOR

## BACKGROUND OF THE INVENTION

### 1. Technical Field

This invention relates to polynorbornene based composite articles and to methods of maufacturing same. Particularly, this invention pertains to a method for maufacturing composite articles composed of norbornene based polymers and various structural components that are inherently incompatible therewith. More particularly, the method of the present pertains to the bulk polymerization by metathesis ring opening polymerization of a norbomene type monomer in the presence of a compatibilized structural component.

### 2. State of the Art

A laminated plastic sheet composite material made up of a slightly foamed or nonfoamed plastic core sandwiched between a metal or hard plastic skin has improved impact resistance and is light in weight. For these reasons, such materials have been used widely for automobile bodies, building panels, and in the superstructure of ships. Conventionally, these laminated sheet materials have been prepared by adhesive bonding and hot-pressing, which have led to some problems in productivity.

To eliminate these productivity problems, it has been proposed to inject a reaction solution consisting of a norbornene based monomer and a metathesis catalyst system between the skin and core of a panel and bulk polymerize the solution to obtain a plastic sandwiched sheet as disclosed in Japanese patent application 62-122718. A plastic laminated sheet is produced quite easily in accordance with this method as compared to laminates prepared by conventional methods. However, the product obtained by this method has its drawbacks in that the polynorbornene does not adhere satisfactorily to the core or skin material. Hence, the performance of the laminated panel so produced was not as expected. One of the causes of the unacceptable adhesion is that metals have no compatibility with polynorbornene and, it is believed, hard plastics cause the deterioration of the catalytic activity of the metathesis catalyst.

Other methods have been suggested for the manufacture of polynorbornene based composite materials. Japanese patent application 63-171038 discloses a method for the manufacture of a composite material by forming an olefinic polymer or hydrocarbon based thermoplastic elastomer layer on a polynorbornene based substrate. Japanese patent application 1-205427 discloses a method for producing an integrally molded composite article comprising a weather resistant skin formed on a polynorbornene based substrate. The article is formed in situ by applying a weather resistant film-forming olefinic polymer to the inside of a mold and subsequently feeding a bulk polymerizable reaction solution comprising a norbornene monomer into the mold and polymerizing the monomer in the mold. The composite materials so produced have improved interfacial adhesion, surface colorability, weatherability, and are free of surface defects. However, since the surface layer is a polyolefin, the hardness and coatability are unsatisfactory.

When the bulk ring-opening polymerization of norbornene monomers is carried out in a mold cavity containing a polyurethane foam, the surface of the foam is attacked or damaged by the metathesis catalyst. Consequently, unreacted monomer remains on the polynorbornene/foam interface which deleteriously affects the adhesion of the polynorbornene polymer to the polyurethane foam. The poor adhesion at this interface allows tiny gaps to form between the foamed material and the polynorbornene. These gaps allow undesirable odors generated by the unreacted monomer to emanate from the article. The gaps also provide routes for moisture to infiltrate into the article ultimately leading to its deterioration.

Even when a norbornene monomer containing solution is polymerized via ring-opening polymerization in the presence of ring-opened polynorbornene substrates, the two seemingly compatible polymers do not bond to each other. Consequently, composite materials so produced are very difficult to obtain. It is believed that the polynorbornene substrate surface, upon exposure to air, deleteriously affects the ring-opening polymerization of the norbornene monomer solution.

## SUMMARY OF THE THE INVENTION

A primary object of this invention is to provide a method for the manufacture of integrally molded polynorbornene based composite materials having compatible structural components. It is a further object of the present invention to provide a composite material without the need for special adhesives.

It is still a further object of this invention to improve the adhesion of structural core and laminate components to a polynorbornene matrix in forming composite articles.

It is another object of this invention to provide polynorbornene composite materials without interface defects.

It is still another object of this invention to provide an odor-free polynorbornene based composite material which has good functional and decorative properties.

These and other objects of the present invention are accomplished by bulk polymerizing a reactive monomer solution comprising a norbornene monomer(s) and a metathesis catalyst system in a mold containing a coated structural component. The coating on the structural component is a polymer that is inert to the monomer(s) and the metathesis catalyst.

The structural component is coated on all of the surfaces that will be in contact with the reactive monomer solution.


## DETAILED DESCRIPTION


### Matrix Material


The matrix material of the invention is polynorbornene obtained by bulk ring-opening polymerization of a reaction solution containing at least one norbornene monomer and a metathesis catalyst in a mold cavity containing a coated structural component.

Preferably, the polynorbornene based composite article of the present invention is manufactured by a reaction injection molding (RIM) method in which at least two low viscosity reactive monomer solutions are mixed and injected into a mold cavity containing a coated structural component. The mixed reaction solution is then polymerized in the mold. One of the reaction solutions contain an activating agent and norbornene monomer(s). The other reaction solution contains a metathesis catalyst and norbornene monomer(s). The two solutions are mixed and injected into a mold and allowed to undergo bulk ring-opening polymrization in order to obtain a molded polynorbornene product.

The molding of the polynorbornene composite product by the RIM method has lower injection pressure requirements than conventional thermoplastic injection molding methods. Accordingly, inexpensive and lightweight molds can be used. Also, this method is suitable for the manufacture of an insert-containing (e.g., core containing) molded product, a laminated molded product, a large molded product, or a complex shaped molded product, due to the adequate fluidity of the starting material in the mold cavity.

Any norbornene monomer can be utilized as the matrix material in this invention, as long as it has a norbornene ring. Norbornene polymers that are manufactured using polycyclic norbornene monomers with three or more rings are particularly preferred. Satisfactory heat resistance for use in composite materials is obtained when norbornene monomers with three or more rings are employed because a polymer with a high heat deformation temperature is obtained. Moreover, the polymer that is produced by this invention can be a thermosetting polymer. In order to obtain a thermosetting polymer, the total monomer should consist of at least 10 wt %, preferably 30 wt % or more, of cross-linkable monomer.

Examples of the norbornene monomers are bicyclic monomers, such as norbornene and norbornadiene, tricyclic monomers, such as dicyclopentadiene, dihydrodicyclopentadiene, etc., tetracyclic monomers, such as tetracyclododecene, etc., pentacyclic monomers, such as tricyclopentadiene, etc., heptacyclic monomers, such as tetracyclopentadiene, etc., their alkyl substituents (for instance, methyl, ethyl, propyl, and butyl substituents), alkenyl substituents (for instance, vinyl substituents), alkylidene substituents (for instance, ethylidene substituents), aryl substituents (for instance, phenyl, tolyl, and naphthyl substituents), etc. Of these, tricyclic, tetracyclic and pentacyclic monomers are preferred because they are easily obtained, and also because of their reactivity, heat resistance, etc.

The cross-linkable monomer is a polycyclic norbornene monomer that has two or more reactive double bonds. Actual examples are dicyclopentadiene, tricyclopentadiene, tetracyclopentadiene, etc. It is not necessary to use special cross-linkable monomers when the cross-linkable monomer is the same as the norbornene monomer.

In addition, monocyclic cycloolefins, such as cyclobutene, etc., that can be polymerized via ring-opening with one or more of the aforementioned norbornene monomers can also be used within a given range, within which the purpose of this invention is not lost.

## Catalyst System

The catalyst system that is employed comprises any metathesis catalyst so long as it can be employed as a catalyst for the ring-opening polymerization of norbornene monomers and a cocatlyst. Examples of metathesis catalysts are the halides, oxyhalides, oxides, organic ammonium salts, etc., of tungsten, molybdenum, tantalumn, and the like. Examples of cocatalysts (activators) are alkyl aluminum halide, alkoxyalkyl aluminum halide, aryloxyalkyl aluminum halide, organotin compounds, etc.

The metathesis catalyst is normally used in the range of approximately 0.01 to 50 millimoles, preferably 0.1 to 20 millimoles, per mole of norbornene monomer. The activator (cocatalyst) is used within a range of preferably 1 to 10 (molar ratio) per catalyst component.

It is preferred that the metathesis catalyst and activator be dissolved in the monomer. However as long as it is within a range where there is essentially no loss of properties in the product, the catalyst and activator can also be suspended or dissolved in a trace of solvent.

## Structural Component

In the manufacture of the integrally molded composite material of the present invention, a material having a surface with no inherent bond forming capacity (adhesion) with the polynorbornene matrix can be used as the structural component, e.g., metal, glass, ceramic, plastics, etc.

Advantageously, any material having a surface which deactivates a metathesis catalyst system or interferes with ring-opening polymerization can also be used as the structural component. Materials that interfere with ring-opening polymerization are those materials having a hydroxy, carboxyl, or amino functionality on their surfaces. Examples are epoxy resins, phenolic resins, unsaturated polyesters, air-exposed polynorbornenes, cellophane, acrylic resins, polyamides, polycarbonates, polyurethanes, paper, wood, gypsum, concrete, etc. When necessary, the structural components may be reinforced with glass fibers and carbon fibers.

There is no limit to the shape of the structural component. It can be in the shape of a sheet, plate, rod, foam, beads, flakes, particles, fabric, or any other three-dimensional shape. Foamed components can be integrated with gas-barrier films or metal coatings for various functions.

The structural components can be laminated to the surface of the polynorbornene matrix laminated between layers of polynorbornene matrix or can be embedded within the polynorbornene matrix.

## Inert Coatings

The polymer coatings that are utilized to coat the structural components are inert to ring-opening polymerization. In addition, they must be film forming and must not interfere with the metathesis catalyst system.

Examples of such polymers are: polyolefins such as high density polyethylene (PE), medium density PE, low density PE, ethylene-propylene copolymer, ethylene-butene-1 copolymer, polypropylene (PP), polybutene-1, polypentene-1, poly(4-methyl pentene-1), or polystyrene; an olefin monomer-ester monomer copolymer such as ethylene-vinyl acetate copolymer or ethylene-acrylic acid ester copolymer; a copolymer of styrene and maleic anhydride; an ester-type polymer such as polyvinyl acetate, polymethyl methacrylate, or polyhexyl methacrylate; chlorides of the foregoing polymers; and mixtures thereof.

Additionally, any block copolymer from a conjugated diene obtained from an aromatic vinyl compound such as styrene (S), isoprene (I), butadiene (B) can also be used. Examples are S-I type, S-B type, S-I-S type, S-B-S type, and S-I-S-I-S type block copolymers and their hydrides; vulcanized rubber such as ethylene-propylene rubber (EPR), ethylene-propylene-diene terpolymer (EPDM), polybutadiene, polyisoprene, styrene-butadiene copolymer, chloroprene rubber, or butyl rubber; and elastomers of these rubber mixtures.

4

Polymer coatings having adhesive properties with respect to the polynorbornene matrix are preferred. Especially preferred are rubber systems, ester-type polymers as described above, acid anhydride-type polymers and chlorinated polymers are preferred. Among them EPDM, polyvinyl acetate, styrene-maleic anhydride copolymer are preferred.

The following modifying agents can be added to the coating system so long as they do not interfere with the ring-opening polymerization reaction. For example, fillers such as titanium oxide, calcium carbonate, aluminum hydroxide, talc, and carbon black; coloring agents such as pigments or dies; antioxidants; UV absorbing agents; antifogging material; antistatic material; adhesion promoters such as a petroleum resin which is obtained by thermopolymerization of dicyclopentadiene with or without the presence of styrene or vinyl acetate; or hydrated petroleum resin to color and/or to improve weather resistance.

## Coating Treatment

According to this invention, any structural component part that is in contact with the ring-opening polymerization solution is coated with the above-described polymers (at least in the area(s) that are in contact with the reaction solution).

When coating the structural components, the coating polymer is dissolved or dispersed together with the modifying agents (if utilized) in a solvent or dispersant (solvent hereafter) and then the structural component is coated by spraying, brushing, or dipping in the coating. Following the coating step, the solvent is allowed to evaporate.

Other suitable methods such as thermal fusion coating (e.g., adhesion by hot applicator) and powder spray coating can be utilized.

Suitable solvents are water; alcohols such as methanol or isopropanol; esters such as ethyl acetate; ketones such as methyl ethyl ketone or cyclohexanone; and hydrocarbons such as benzene, toluene, hexane, ethylidenenorbornene, or dicyclopentadiene.

In coating a structural core component which is embedded in the ring-opening polymerization mixture, the entire surface of the core component is coated. In coating a structural laminate component only the side of the laminate that is in contact with the matrix forming material is coated. Where the laminate is sandwiched between layers of matrix material, both sides of the laminate are coated.

When coating the structural component with the inert polymer coating, the structural component and the inert polymer should be capable of forming a bond. However, if the two are not compatible then the surface of the structural component may first be coated with a base adhesive material such as epoxy resin, urethane base adhesive, polyester base adhesive, phenolic resin base adhesive, melamine base adhesive, or polyamide base adhesive. The structural component is then coated with the inert polymer. In the latter case (e.g., where incompatible surfaces are concerned), the part should be in sheet form for greater convenience in operating.

## Composite Manufacture

The coated structural component part is placed in a mold and then the reactive monomer solution is poured or injected into the mold. The specified bulk ring-opening polymerization molding conditions are then initiated.

The coated structural component(s) can be placed in a die against the die wall (laminate) or it can be propped up in the die with the aid of a spacer (core).

Depending upon its shape and/or its size, the coated part may be mixed in a reaction solution and then the resulting mixture may be conveyed to the mold.

Molding of the polynorbornene composite products of the present invention can be carried out by the RIM method in which a reaction solution is fed into a mold and allowed to polymerize (via bulk ring-opening polymerization). In a solution feeding method, at least two reaction solutions are mixed instantaneously in the mixing head of a RIM apparatus, and then conveyed into a mold at high temperature. If the solutions have a long pot-life, then they are mixed in a mixer and conveyed into a preheated mold. The reaction solution can be conveyed to the mold in one shot or in several shots. These operations are carried out under an inert gas atmosphere if necessary. The pressure in the mold is atmospheric to 50 kg/cm$^2$, preferably 0.1-5 kg/cm$^2$.

## Molding Conditions

In the preferred method for manufacturing polynorbornene polymers, the norbornene monomer is divided into two solutions, which are then placed in separate vessels. A metathesis catalyst is added to one vessel, while an activator is added to the other vessel so that two stable reaction solutions are prepared. These two reaction solutions are mixed and then injected into a mold or frame of the desired shape. Ring-opening polymerization by the bulk method is then performed.

The mold temperature is normally 30°C or more, preferably 40 to 200°C, and most preferably, 50 to 130°C. The components that are used in the polymerization reaction should be stored and used in an inert gas atmosphere, such as nitrogen.

The mold material can be metal, resin, wood, plastic, etc.

Additives such as antioxidants, fillers, reinforcers, foaming agents, dyes, coloring agents, elastomers, etc., can be added to the polynorbornene resin. These additives are normally dissolved or dispersed in the reaction solution, but there are cases where they are placed inside the mold.

Foaming agents can be added to the reaction solution, which is then injected into the mold, when it is desired to have a foamed matrix material. Preferred foaming agents are usually liquids. Examples are organic compounds with low boiling points that easily evaporate, such as the hydrocarbons of pentane, hexane, etc., halogenated hydrocarbons such as methylene chloride, trichlorofluoromethane, dichlorodifluoromethane, etc., or an inert gas, such as nitrogen, argon, etc.

The composite molded articles of this invention can be used as automobile parts, electrical parts, construction panels, etc.

The following examples will show one skilled in the art how to operate within the scope of the present invention and are not intended to serve as a limitation on the scope thereof. In these examples, all parts are parts by weight and all percentages are percentages by weight unless otherwise indicated.

## Example 1

A 10% EPDM (Grade EP-35, Nihon Gosei Gomu) solution in toluene was prepared. The solution was sprayed on one side of a stainless steel plate (20 cm x 20 cm x 0.5 mm). The toluene was allowed to evaporate. The resulting thickness of the coating was about 50 $\mu$m.

Two mold halves and a spacer (to give a 3 mm thickness) were arranged to give a 20 cm x 20 cm x 3 mm cavity. The stainless steel plate (laminate) is placed in one of the mold halves by facing the EPDM coated side into the mold cavity.

The die temperature was maintained at 70°C and a monomer solution was conveyed into the mold.

The bulk ring-opening polymerization solutions used were a mixture of solution A and solution B set forth below.

A solution was prepared by adding and dissolving 6.5 parts of styrene-isoprene-styrene block copolymer (SIS, Quintac 3421, Nippon Zeon) in 100 parts of dicyclopentadiene (DCP). The resulting solution was divided into two equal parts and each placed in two separate vessels. Into one of the vessels diethylaluminum chloride (DEAC) 41 millimoles, n-propyl alcohol 41 millimoles, and silicon tetrachloride of 21 millimoles (based on DCP) were added and mixed (solution A). In the other vessel, tri(tridecyl)-ammonium molybdate was added to a concentration of 10 millimoles (based on DCP) and 4 parts of a phenolic resin based antioxidant (Ethanox 702, Ethyl Corp) were added per 100 parts DCP (solution B).

A 1:1 mixture of solutions A and B was rapidly fed into the mold through a gear pump and power mixer at atmospheric pressure.

Three minutes after injection, the mold was opened and the stainless steel laminated product was retrieved and cooled to room temperature.

An attempt was made to separate the stainless steel laminate from the matrix product. The steel plate could not be peeled off by human power. By prying the steel laminate with a tool, the EPDM layer was ruptured.

For comparison, a stainless steel plate without the EPDM coating was molded in the same manner and the DCP layer and the stainless steel were separated effortlessly.

## Example 2

A similar composite material was prepared according to the procedure given in Example 1 by replacing EPDM with styrene-maleic anhydride copolymer (Dylark 232, ARCO). The resulting thickness of the coating was about 80 μm.

The stainless steel component could not be peeled off from the matrix. By prying the laminate with a tool, the styrene-maleic anhydride copolymer layer was ruptured.

## Example 3

A 50% polyvinyl acetate (Grade KE60, Konishi)/methanol solution was spray coated onto one side of a 220 mm square, 3 mm thick veneer board. The coating was dried for 20 minutes at 100°C. The coated veneer board was used to cover a 220 mm x 220 mm x 3 mm stainless steel mold half so that the coated side of the veneer board faced into the mold cavity. The mold was preheated to 70°C and the solutions used in Example 1 (e.g., solutions A and B) were rapidly fed into the mold by using a gear pump and power mixer. The reaction solutions were in intimate contact with the veneer board.

Three minutes after injection of the reaction solutions, the mold was opened and the molded product with a tightly bonded veneer board laminate was removed from the mold. The interface of the veneer and DCP matrix was separated by force. The separation occurred at the interface of the polyvinyl acetate and DCP layer.

A similar product was prepared with veneer, but without the polyvinyl acetate coating. A composite was molded in the same manner as set forth above. The interface of the DCP matrix layer and the veneer board laminate had a sticky feeling because of the unreacted monomer. The layers were readily separated.

## Examples 4 to 9

Molded composites were prepared according to the procedure of Example 3, except that the adhesive enhancers set forth in Table 1 were mixed with the polyvinyl acetate coating solution set forth in Example 3. The results are given in Table 1.

By the addition of the adhesion enhancers, the bonding strength of the structural component to the polynorbornene matrix material was increased.

The bonding strength was subjectively determined by feeling the force necessary to separate the laminate from the DCP matrix layer using a tool having a 15 mm-wide bite.

Table 1

| Example | Polymer adhesion enhancers | Mixing ratio adhesion enhancers/polyvinyl acetate | Bonding strength | State of interface after forced peeling |
|---|---|---|---|---|
| 4 | 30% chlorinated polypropylene (Superchlone 803L, Sanyo Kokusaku Pulp) in toluene | 1/1 | Strong | Polymer coating layer ruptured |
| 5 | Same as above | 1/4 | Very strong | Laminate board ruptured |
| 6 | 10% ethylene-vinyl acetate copolymer (Ultrathene 510F, Toso) in toluene | 1/1 | Very strong | Polymer coating layer ruptured |
| 7 | 10% polystyrene (Himer ST-129, Sanyo Kasei) in toluene | 1/1 | Very strong | Polymer coating layer ruptured |
| 8 | 10% ethylene-vinyl chloride copolymer (Rocoron E, Toso) in methyl ethyl ketone | 1/1 | Very strong | Polymer coating layer ruptured |
| 9 | SIS (Quintac 3421, Nippon Zeon) | 1/4 | Very strong | Polymer coating layer ruptured |

Example 10

A foamed polyurethane component (density, 0.1 g/cm$^3$) of 200 mm x 190 mm x 10 mm dimensions was prepared from a polyol, an isocycanate, and a foaming agent. The entire surface of the foamed polyurethane component was coated with a 10% EPDM in toluene solution to give a film of about 50 mm. The polyurethane component was placed in a mold with a 200 mm x 200 mm x 16 mm cavity. The procedure of Example 1 was repeated to prepare a composite product.

Three minutes after the injection of the reaction solution the mold was opened and a polyurethane foam/DCP composite product was retrieved from the mold. The bonding of the EPDM coated polyurethane foam to the DCP matrix was acceptable. No incomplete polymerization of DCP along the interface was observed and no monomer odor was present.

The same procedure was repeated with the use of polyurethane foam without the EPDM coating to prepare a composite product. The product had a sticky feeling and a monomer odor was present at the interface of the polyurethane foam laminate and the DCP matrix layer. The polyurethane foam laminate and DCP matrix layer were easily separated by hand.

## Claims

1. A process for producing an integrally molded composite article comprising a polymer matrix layer and at least one laminated structural layer, said process comprising: providing a mold having a coated structural component deposed therein; feeding a bulk polymerizable liquid reaction mixture comprising at least one norbornene monomer, a metathesis catalyst, and a cocatalyst into said mold, wherein said liquid reaction mixture is in contact with at least a portion of said coated structural component; and polymerizing said norbornene monomer forming a ring-opened polynorbonene matrix having a structural component adhered thereto.

2. A process for producing an integrally molded composite article comprising at least one structural core component deposed within a polymer matrix, said process comprising: providing a mold having at least one coated structural component deposed therein; feed a bulk polymerizable liquid reaction mixture comprising at least one norbornene monomer, a metathesis catalyst, and a cocatalyst into said mold wherein said liquid reaction mixture is in contact with the periphery of said coated structural component; and polymerizing said norbornene monomer thereby forming a ring-opened polynorbornene matrix having an adherent core component bounded therein.

3. The process of claim 1 or 2 wherein the coated structural component is coated with a coating composition comprising a polymer selected from the group consisting of high-density polyethylene, intermediate-density polyethylene, low-density polyethylene, ethylene-propylene copolymer, ethylene-butene-1 copolymer, polypropylene, polybutene-1, polypentene-1, poly (4-methylpentene-1), polystyrene, styrene-maleic anhydride copolymer, ethylene-propylene rubber, ethylene-propylene-diene terpolymer, ethylene-vinyl acetate copolymer, ethylene-acrylic acid ester copolymer, polyvinyl acetate, polymethyl methacrylate, polyhexyl methacrylate; block copolymers of S-I, S-B, S-I-S, S-B-S, S-I-S-I-S, and their hydrides; polybutadiene, polyisoprene, styrene-butadiene copolymer, chloroprene rubber, butyl rubber, and mixtures thereof.

4. The method of claim 3 wherein the coating composition further contains modifying additives selected from the group consisting of fillers, coloring agents, antioxidants, UV absorbing agents, antifogging agents, antistatic agents, adhesion promoters, and mixtures thereof.

5. The method of claim 4 wherein the adhesion promoters are selected from the group consisting of thermopolymerization products of dicyclopentadiene, thermopolymerization products of dicyclopentene with styrene or vinyl acetate, and mixtures thereof.

6. The method of claim 1 or 2 wherein the structural component is selected from the group consisting of polymeric materials, glass, metal, ceramics, and mixtures thereof.

7. The method of claim 6 wherein the structural component is in the shape of a sheet, plate, rod, foam, bead, flake, particle, fabric or combinations thereof.

8. The method of claim 6 wherein the structural component is first coated with an adhesive material.

9. The method of claim 1 or 2 wherein the norbornene monomer is selected from the group consisting of bicyclic monomers, tricyclic monomers, tetracyclic monomers, pentacyclic monomers, heptacyclic monomers and mixtures thereof.

10. The method of claim 9 wherein the norbornene monomer is selected from the group consisting of norbornene, norbornadiene, dicyclopentadiene, dihydrodicyclopentadiene tetracyclododecene, tricyclopentadiene, tetracyclopentadiene, including the alkyl, alkenyl, alkylidenyl and aryl substituents thereof.

11. The method of claim 1 or 2 wherein the reaction mixture further comprises an additive selected from the group consisting of antioxidants, fillers, reinforcing agents, foaming agents, dyes, pigments, elastomers, and mixtures thereof.

12. An integrally molded composite article comprising a substrate having at least one laminated surface layer, said substrate comprising a ring-opened norbornene polymer that is bulk polymerized from at least one norbornene monomer in contact with a surface of at least one structural component, said surface is coated with a coating composition that does not interfere with the polymerization reaction and wherein an adherent bond is formed between the coated surface of said structural component and said substrate.

13. An integrally molded composite article comprising a substrate having at least one structural core component embedded therein, said substrate comprising a ring-opened norbornene polymer that is bulk polymerized from at least one norbornene monomer in contact with at least one structural core component, said core component is coated with a coating composition that does not interfere with the polymerization reaction and wherein an adherent bond is formed between said coated core component and said substrate.

14. The article of claim 12 or 13 wherein the coated structural component is coated with a coating composition comprising a polymer selected from the group consisting of high-density polyethylene, intermediate-density polyethylene, low-density polyethylene, ethylene-propylene copolymer, ethylene-butene-1 copolymer, polypropylene, polybutene-1, polypentene-1, poly (4-methylpentene-1), polystyrene, styrene-maleic anhydride copolymer, ethylene-propylene rubber, ethylene-propylene-diene terpolymer, ethylene-vinyl acetate copolymer, ethylene-acrylic acid ester copolymer, polyvinyl acetate, polymethyl methacrylate, polyhexyl methacrylate; block copolymers of S-I, S-B, S-I-S, S-B-S, S-I-S-I-S, and their hydrides; polybutadiene, polyisoprene, styrene-butadiene copolymer, chloroprene rubber, butyl rubber, and mixtures thereof.

15. The article of claim 14 wherein the coating composition further contains modifying additives selected from the group consisting of fillers, coloring agents, antioxidants, UV absorbing agents, antifogging agents, antistatic agents, adhesion promoters, and mixtures thereof.

16. The article of claim 15 wherein the adhesion promoters are selected from the group consisting of thermopolymerization products of dicyclopentadiene, thermopolymerization products of dicyclopentene with styrene or vinyl acetate, and mixtures thereof.

17. The article of claim 12 or 13 wherein the structural component is selected from the group consisting of polymeric materials, glass, metal, ceramics, and mixtures thereof.

18. The article of claim 17 wherein the structural component is in the shape of a sheet, plate, rod, foam, bead, flake, particle, fabric or combinations thereof.

19. The article of claim 18 wherein the structural component is first coated with an adhesive material.

20. The article of claim 12 or 13 wherein the norbornene monomer is selected from the group consisting of bicyclic monomers, tricyclic monomers, tetracyclic monomers, pentacyclic monomers, heptacyclic monomers and mixtures thereof.

21. The article of claim 20 wherein the norbornene monomer is selected from the group consisting of norbornene, norbornadiene, dicyclopentadiene, dihydrodicyclopentadiene tetracyclododecene, tricyclopentadiene, tetracyclopentadiene, including the alkyl, alkenyl, alkylidenyl and aryl substituents thereof.

22. The article of claim 12 or 13 wherein the reaction mixture further comprises an additive selected from the group consisting of antioxidants, fillers, reinforcing agents, foaming agents, dyes, pigments, elastomers, and mixtures thereof.